# EUROPÄISCHE PATENTSCHRIFT

(11) **EP 1 714 125 B1**
(45) Veröffentlichungstag und Bekanntmachung des Hinweises auf die Patenterteilung: **24.07.2013**
(21) Anmeldenummer: 05701097.7
(22) Anmeldetag: 21.01.2005
(51) Int. Cl.: G01L 9/00, G01F 1/38, G01L 7/08

(54) **KAPAZITIVER DRUCKSENSOR MIT HEISSGEPRÄGTEN MEMBRAN**
CAPACITIVE PRESSURE SENSOR HAVING A HOT-STAMPED DIAPHRAGM
CAPTEUR DE PRESSION CAPACITIF A MEMBRANE ESTAMPEE A CHAUD

(30) Priorität: 24.01.2004 DE 102004003707
(43) Veröffentlichungstag der Anmeldung: 25.10.2006
(73) Patentinhaber: Marquardt GmbH, 78604 Rietheim-Weilheim (DE)
(72) Erfinder: MÜLLER, Heinrich, 78532 Tuttlingen (DE); ALLMENDINGER, Frank, 78355 Hohenfels (DE); KAMPF, Florian, 78532 Tuttlingen (DE)
(74) Vertreter: Otten, Herbert
(86) Internationale Anmeldenummer: PCT/EP2005/000568
(87) Internationale Veröffentlichungsnummer: WO 2005/071378

(56) Entgegenhaltungen:
- DE-A1- 3 636 930
- DE-A1- 19 527 919
- GB-A- 2 259 147
- US-A- 4 249 164
- US-A- 4 495 232
- US-A1- 2001 020 320
- US-B1- 6 654 697

## Beschreibung

Die Erfindung betrifft eine Vorrichtung zur Trennung zweier fluider Medien nach dem Oberbegriff des Patentanspruchs 1.

Solche Vorrichtungen zur Trennung zweier fluider Medien finden vielfältige Anwendungen, beispielsweise als Drucksensoren, Differenzdrucksensoren oder Durchflußsensoren. Insbesondere kann eine derartige Vorrichtung als Füllstandgeber für wasserführende Haushaltsgeräte wie Waschmaschinen und/oder Geschirrspüler eingesetzt werden.

Aus der DE 195 27 919 A1 ist eine Vorrichtung zur Trennung zweier fluider Medien bekannt, die ein Gehäuse aufweist. Im und/oder am Gehäuse ist eine Membran angeordnet, derart daß wenigstens ein mittels der Membran abgetrenntes Volumen im und/oder am Gehäuse gebildet ist. Die Membran dient zur Hinderung des Austausches zwischen den beiden Medien und besteht aus einer mit dem Gehäuse verklebten Folie.

Nachteilig bei der bekannten Vorrichtung ist, daß die Verklebung der Membran aufwendig und fehlerkritisch ist. Dadurch ist ein erhöhter Ausschuß bei der Herstellung dieser Vorrichtungen festzustellen. Außerdem ist die bekannte Vorrichtung für viele Anwendungen, insbesondere im Hausgerätesektor mit seinen extremen Kostenanforderungen zu teuer.

Weiter ist aus der US 2001/0020320 A1 eine Druckmeßvorrichtung mit einem Gehäuse bekannt, wobei im Gehäuse eine Kammer mit einer Membran in der Art einer Druckmeßkapsel ausgebildet ist. Bei der Membran handelt es sich um eine Heißprägefolie, die durch Heißprägen am Gehäuse befestigt ist. Die metallisierte Membran ist als Elektrode in einem Kondensator angeordnet ist, derart daß die Auslenkung der Membran anhand der Kapazitätsänderung des Kondensators in der Art einer kapazitiven Wegmessung meßbar ist. Näheres zur Ausgestaltung der Druckmeßvorrichtung ist diesem Dokument nicht zu entnehmen.

GB 2 259 147 offenbart eine kapazitive Druckmessvorrichtung, wobei eine Gegenelektrode als eine Leiterbahnfläche auf einer Leiterplatte angeordnet ist, und wobei eine Membran als Elektrode mittels eines Abstandrings an der Leiterplatte gelötet ist.

Der Erfindung liegt die Aufgabe zugrunde, die Vorrichtung zur Trennung zweier fluider Medien im Hinblick auf deren Wirtschaftlichkeit sowie Serientauglichkeit weiterzuentwickeln.

Diese Aufgabe wird bei einer gattungsgemäßen Vorrichtung zur Trennung zweier fluider Medien durch die kennzeichnenden Merkmale des Anspruchs 1 gelöst.

Erfindungsgemäß wird bei der Vorrichtung zur Trennung zweier fluider Medien eine Heißprägefolie als Membran verwendet. Diese Membran ist durch Heißprägen im und/oder am Gehäuse befestigt. Zur Herstellung von Leiterplatten ist das Heißprägen von Leiterbahnen mittels einer Heißprägefolie auf einem Träger an sich bekannt, wozu beispielsweise auf die DE 31 16 078 A1 verwiesen wird. Die auf der Leiterplatte befestigten Leiterbahnen dienen jedoch der Stromführung und nicht als auslenkbare Membran, beispielsweise für die Trennung von fluiden Medien, mithin einem völlig anderen Zweck.

Erfindungsgemäß ist bei einem besonders für Hausgeräte geeigneten Druckmesser vorgesehen, daß das Gehäuse für die Kammer mit der Membran in der Art einer Druckmeßkapsel ausgestaltet ist. Die Druckmeßkapsel ist an der die Membran aufweisenden Seite mittels eines Abstandrings an der einen Seite einer Leiterplatte angeordnet. Falls anstelle eines Einfach-Druckmessers ein Doppel-Druckmesser gewünscht ist, läßt sich dieser in einfacher Weise dadurch realisieren, indem eine weitere Druckmeßkapsel in etwa spiegelbildlich an der anderen Seite der Leiterplatte angeordnet ist. Die Gegenelektrode zur Membran ist in der Art einer Leiterbahnfläche auf der Leiterplatte angeordnet. Desweiteren kann eine Auswerteschaltung für die Kapazitätsänderung zur Ermittlung des Drucks auf der Leiterplatte angeordnet sein. Die Leiterplatte kann zwecks elektrischen Anschlusses einen Steckrahmen aufweisen. Der Druckmesser läßt sich somit als kompaktes, selbständiges Modul herstellen.

In einer besonderen Ausführungsform der Erfindung ist auch ein für Haushaltsgeräte geeigneter Durchflussmesser derart vorgesehen, dass am Gehäuse eine Zuleitung mit einer Querschnittsverengung zur Differenzdruck-Durchflußmessung angeordnet ist. Vor und hinter der Querschnittsverengung ist ein Ein- und/oder Auslaßkanal zu einer ersten sowie einer zweiten Kammer angeordnet. Der vor der Querschnittsverengung auftretende Druck wird mittels des Ein- und/oder Auslaßkanals zu der in etwa ringförmig ausgestalteten, ersten Kammer geleitet. Diese Kammer ist mit einer der anderen Kammer zugewandten Membran versehen. Der hinter der Querschnittsverengung auftretende Sog wird mittels des weiteren Ein- und/oder Auslaßkanals zu der zweiten Kammer geleitet. Somit läßt sich mit Hilfe der Auslenkung der Membran der an der Querschnittsverengung auftretende Differenzdruck messen, welcher wiederum in Korrelation zum Durchfluß durch die Zuleitung steht. Der Ein- und/oder Auslaßkanal kann jeweils mit einem Filter an der Zuleitung versehen sein, um so das Eindringen von Verschmutzungen in die beiden Kammern zu verhindern, was wiederum die Lebensdauer des Druchflußmessers steigert.

Weitere Ausgestaltungen der Erfindung sind Gegenstand der abhängigen Ansprüche.

Eine Differenzdruckmessung wird in einfacher Art ermöglicht, indem die Membran zwischen zwei Volumen im und/oder am Gehäuse befestigt ist. Die beiden Volumina sind dann gegeneinander druckdicht mittels der Membran getrennt.

Besonders geeignet als Heißprägefolie ist eine Metallfolie. Je nach Einsatzzweck und in Abhängigkeit von der Art der zu trennenden, fluiden Medien besteht die Metallfolie aus Kupfer, Nickel o. dgl., wobei die Metallfolie in zu kostengünstiger Weise durch galvanische Abscheidung, aber auch durch chemische Abscheidung, Walzen o. dgl. herstellbar ist. Allerdings kann bei geringeren Anforderungen aus Kostengründen auch eine Kunststoff-Folie, die gegebenenfalls metallisiert ist, oder eine Metall-Kunststoff-Compoundfolie als Heißprägefolie in Frage kommen. Das Gehäuse der Vorrichtung kann aus Kunststoff bestehen, und so in einfacher, herkömmlicher Art mittels Spritzgießen hergestellt werden.

Zweckmäßigerweise weist das Gehäuse wenigstens eine Kammer in der Art eines abgetrennten Volumens bzw. Raums für wenigstens eines der fluiden Medien auf. An der einen Seite der Kammer kann die Membran angeordnet sein, während die Kammer an den anderen Seiten durch Wände aus Kunststoff begrenzt ist. Die Kammer besitzt nach außen gehende Verbindungsmittel für das fluide Medium. Diese Verbindungsmittel können in der Art eines Ein- und/oder Auslaßkanals ausgestaltet sein. Dadurch ist die Trennvorrichtung als ein komplettes Modul herstellbar, das dann lediglich in die Zuleitungen zu den fluiden Medien einzubauen ist.

In einer Erweiterung läßt sich die Funktionalität der Trennvorrichtung erhöhen, indem diese gleichzeitig Bestandteil eines Messmittels zur Differenz- und/oder Absolutdruckmessung zwischen den beiden fluiden Medien ist. Die Trennvorrichtung dient dann als eine Art von Absolutdruck-, Differenzdruck- und/oder Füllstandsensor. Zur Ermittlung des zwischen den beiden fluiden Medien wirkenden Drucks läßt sich dabei einfach die elastische Auslenkung, d.h. die Aus- bzw. Einbauchung der Membran messen.

Die Messung der Auslenkung für die Druckmessung zwischen den beiden Medien läßt sich in weiterer Ausgestaltung in einfacher Weise dadurch verwirklichen, indem die Trennvorrichtung Bestandteil eines Wegmeß-Kondensatörs ist. Hierbei besteht die Membran aus Metall oder einem metallisierten Kunststoff. Die Membran ist als Elektrode in einem der kapazitiven Wegmessung dienenden Kondensator angeordnet. Dadurch läßt sich dann die Auslenkung der Membran anhand der Kapazitätsänderung des Kondensators messen.

In kompakter Anordnung läßt sich die als Elektrode für den Kondensator dienende metallische Fläche der Membran gleichzeitig als elektrischer Anschluß zu einer Auswerteschaltung für die Kapazitätsänderung des Kondensators verwenden. Es bietet sich dann weiter an, gleichzeitig die Auswerteschaltung im und/oder am Gehäuse und/oder in Verbindung mit dem Gehäuse stehend anzubringen, um so einen kompletten Sensor zu erhalten. Zweckmäßigerweise ist dann die Auswerteschaltung in der Art einer integrierten Schaltung ausgestaltet. Vorteilhafterweise ist so ein kapazitiver Druckgeber und sein Anschluss an die Auswerteelektronik mit minimaler Teilezahl sowie mittels eingeführter, rationeller Serientechnologien bereitgestellt.

Die mit der Erfindung erzielten Vorteile bestehen insbesondere darin, daß die erfindungsgemäße Vorrichtung zur Trennung zweier fluider Medien einfach und kostengünstig herstellbar ist. Die Trennvorrichtung ist daher zum Einsatz als Drucksensor für den Hausgerätesektor mit seinen extremen Kostenanforderungen besonders geeignet.

Ausführungsbeispiele der Erfindung mit verschiedene Weiterbildungen und Ausgestaltungen sind in den Zeichnungen dargestellt und werden im folgenden näher beschrieben. Es zeigen
- Fig. 1: schematisch in der Art einer Prinzipskizze eine Vorrichtung zur Trennung zweier fluider Medien,
- Fig. 2: die Vorrichtung aus Fig. 1 in einer Ausgestaltung zur Differenzdruckmessung der fluiden Medien,
- Fig. 3: eine Vorrichtung zur Differenzdruckmessung der fluiden Medien gemäß einem weiteren Ausführungsbeispiel,
- Fig. 4: die Vorrichtung aus Fig. 1 in einer Ausgestaltung zur Absolutdruckmessung des einen fluiden Mediums,
- Fig. 5: eine Vorrichtung zur Druckmessung des einen fluiden Mediums gemäß einem weiteren Ausführungsbeispiel,
- Fig. 6: die nähere Ausgestaltung eines Einfach-Druckmessers im Schnitt,
- Fig. 7: die nähere Ausgestaltung eines Doppel-Druckmessers im Schnitt und
- Fig. 8: den Schnitt durch einen Differenzdruck-Durchflußmesser.

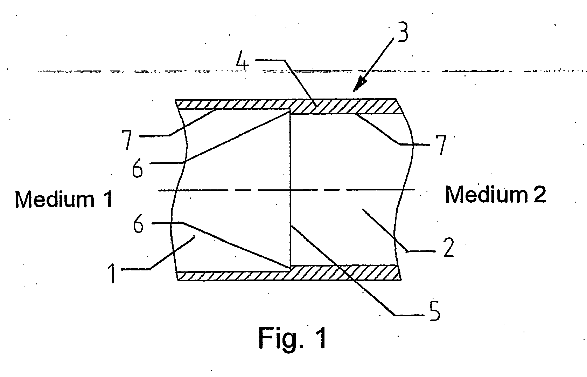

In Fig. 1 ist eine Vorrichtung zur gas- und/oder druckdichten Trennung zweier fluider Medien 1, 2, nachfolgend als Trennvorrichtung 3 bezeichnet, schematisch dargestellt. Bei den fluiden Medien 1, 2 kann es sich um Gase, wie Luft, Sauerstoff, Stickstoff o. dgl., und/oder Flüssigkeiten, wie Wasser, Öl o. dgl., handeln. Die Trennvorrichtung 3 besitzt ein Gehäuse 4. Im Gehäuse 4, und zwar in dessen Inneren ist eine Membran 5 zur Hinderung des Austausches zwischen den beiden fluiden Medien 1, 2 angeordnet. Bei der Membran 5 handelt es sich um eine Folie, und zwar erfindungsgemäß um eine Heißprägefolie. Die Membran 5 ist durch Heißprägen an den Heißprägungsstellen 6 im Gehäuse 4 befestigt.

Mittels der Membran 5 ist im und/oder am Gehäuse 4 ein abgetrenntes Volumen gebildet. Und zwar ist vorliegend die Membran 5 zwischen zwei Volumen im und/oder am Gehäuse 4 befestigt, derart daß ein Raum für das Medium 1 sowie ein weiterer Raum für das Medium 2 gebildet ist. Die beiden Volumen sind gegeneinander druckdicht mittels der Membran 5 getrennt.

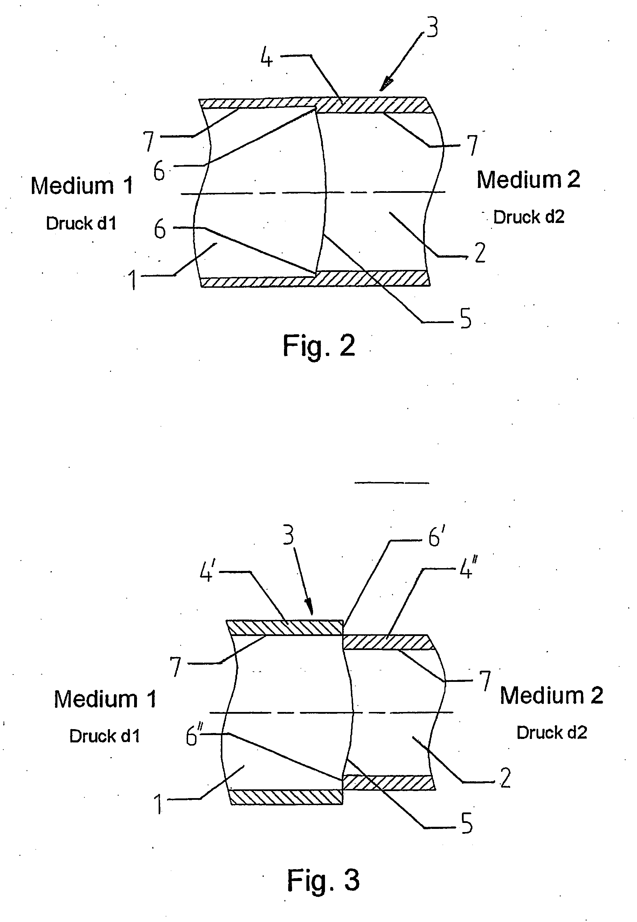

Wie der Fig. 2 zu entnehmen ist, dient die Trennvorrichtung 3 der Differenzdruckmessung zwischen den beiden fluiden Medien 1, 2. Im dargestellten Fall ist der vom ersten Medium 1 auf die Membran 5 ausgeübte erste Druck d1 größer als der zweite Druck d2, der vom zweiten Medium 2 ausgeübt wird. Dadurch wird die Membran 5 in einer Art von Wölbung zwischen den Heißprägungsstellen 6 in Richtung auf das zweite Medium 2 ausgelenkt. Die Größe der Auslenkung der Membran 5 korreliert mit dem Differenzdruck d2-d1 zwischen den beiden Medien 1, 2.

Gemäß einem weiteren Ausführungsbeispiel, das in Fig. 3 zu sehen ist, ist das Gehäuse 4', 4" zweiteilig ausgebildet. Der eine Gehäuseteil 4' nimmt das erste Medium 1 mit dem Druck d1 und das zweite Gehäuseteil 4" das zweite Medium 2 mit dem Druck d2 auf. Die Membran 5 ist nun hier am Gehäuse 4', 4" angeordnet, indem die aus einer Heißprägefolie bestehende Membran 5 mittels Heißprägen an den Heißprägungsstellen 6' am einen Gehäuseteil 4' sowie an den Heißprägungsstellen 6" am anderen Gehäuseteil 4" befestigt ist. Anhand der Wölbung der Membran 5 läßt sich wiederum der Differenzdruck d2-d1 zwischen den beiden Medien 1, 2 feststellen.

Das Gehäuse 4, 4', 4" der Trennvorrichtung 1 besteht aus Kunststoff und kann mittels Spritzgießen hergestellt werden. In Abhängigkeit von den Anforderungen, beispielsweise im Hinblick auf Korrosion, Maximaldrücke o. dgl., die von den beiden Medien 1, 2 vorgegeben sind, kann als Heißprägefolie eine Metallfolie aus Kupfer, Nickel o. dgl., gewählt werden. Es bietet sich dann an, die Metallfolie in bekannter Art auf der Prägeseite galvanisch aufzurauhen, um so die Haftfestkeit zu erhöhen. Die Metallfolie kann galvanisch abgeschieden, chemisch abgeschieden, gewalzt o. dgl. hergestellt sein. Selbstverständlich kann die Heißprägefolie auch aus einer Kunststoff Folie, die gegebenenfalls metallisiert ist, oder aus einer Metall-Kunststoff-Compoundfolie bestehen.

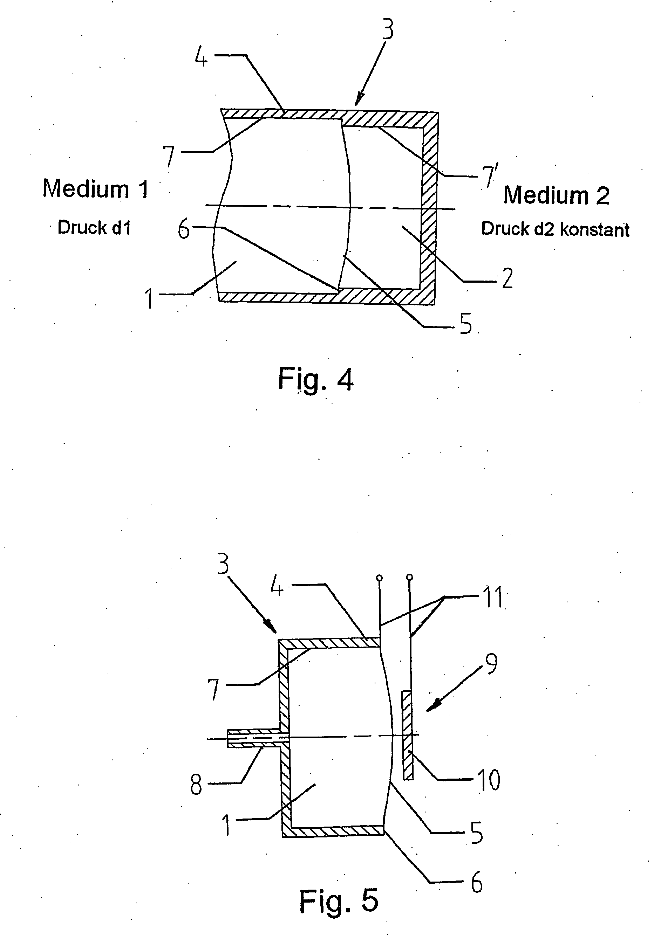

Zur Aufnahme des fluiden Mediums 1, 2 weist das Gehäuse 4, 4', 4" wenigstens eine Kammer 7 in der Art eines abgetrennten Volumens auf. Die Kammer 7 besitzt wiederum am Gehäuse 4, 4', 4" nach außen gehende Verbindungsmittel für das fluide Medium 1, 2. Ein solches in der Art eines Ein- und/oder Auslaßkanals 8 ausgestaltetes Verbindungsmittel ist in Fig. 5 dargestellt. Wie man weiter der Fig. 5 entnimmt, ist die Membran 5 an der einen, an sich offenen Seite der Kammer 7 angeordnet. An den anderen Seiten ist die Kammer 7 durch Wände aus Kunststoffbegrenzt, so daß die Kammer 7 in etwa topfförmig ausgestaltet ist.

Die in Fig. 4 dargestellte Trennvorrichtung 3 dient der Absolutdruckmessung zwischen den beiden fluiden Medien 1, 2. Prinzipiell ist hier die Trennvorrichtung 3 wie diejenige der Fig. 2 ausgestaltet, allerdings ist die Kammer 7' zur Aufnahme des zweiten Mediums 2 abgeschlossen und besitzt kein Verbindungsmittel am Gehäuse 4 nach außen. Damit ist der Druck d2 des Mediums 2 in der Kammer 7' konstant, so daß anhand der Wölbung der Membran 5 der absolute Druck des ersten Mediums 1 ermittelt werden kann.

Wie bereits erwähnt, wird zur Bestimmung des zwischen den beiden Medien 1, 2 wirkenden Drucks d1, d2 die elastische Auslenkung der Membran 5, d.h. deren Aus- bzw. Einbauchung, gemessen. Um die Auslenkung der Membran 5 messen zu können, besteht die Membran 5 aus Metall oder einem metallisierten Kunststoff. Die Membran 5 ist weiter als die eine Elektrode in einem Kondensator 9 angeordnet, wie anhand von Fig. 5 an einem Drucksensor dargestellt ist. Bei diesem Drucksensor wird im übrigen das fluide Medium 1, dessen Druck zu messen ist, über den Ein- und/oder Auslaßkanal 8 der Kammer 7 zugeführt. Die Membran 5 trennt die Kammer 7 gegenüber der Außenseite des Gehäuses 4 ab, so daß es sich in diesem Fall bei dem anderen fluiden Medium 2 um die Umgebungsluft handelt. Der Membran 5 gegenüberliegend befindet sich eine Platte 10 als die andere Elektrode des Kondensators 9. Mittels elektrischer Anschlüsse 11 können die Membran 5 sowie die Platte 10 des Kondensators 9 mit elektrischer Ladung beaufschlagt werden. Dadurch ist die Auslenkung der Membran 5 anhand der Kapazitätsänderung des Kondensators 9 meßbar. Da die Kapazitätsänderung des Kondensators 9 mit der Auslenkung der Membran 5 korreliert, wirkt der Kondensator 9 in der Art eines Wegmeßkondensators.

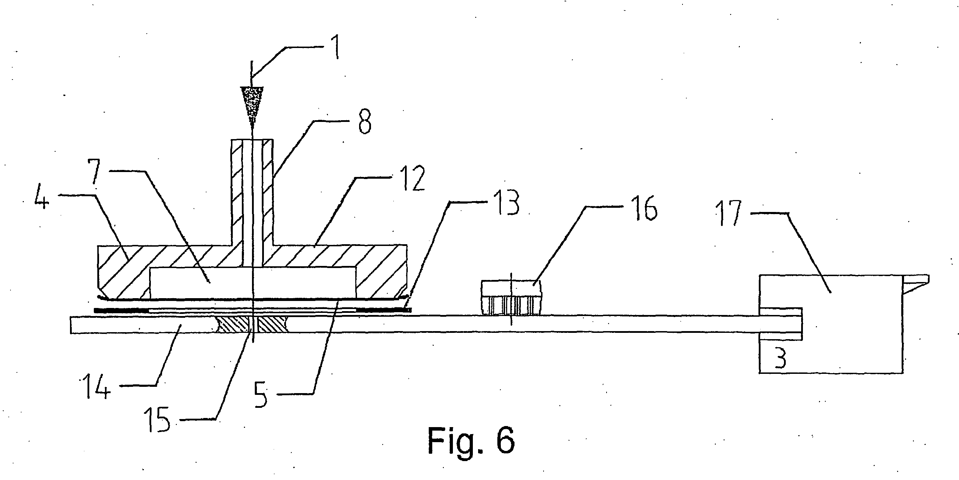

Es bietet sich dann an, die als Elektrode für den Kondensator 9 dienende metallische Fläche der Membran 5 über den elektrischen Anschluß 11 mit einer in Fig. 5 nicht weiter gezeigten Auswerteschaltung für die Kapazitätsänderung des Kondensators 9 zu verbinden. Falls gewünscht kann die metallische Fläche der Membran 5 gleichzeitig als elektrischer Anschluß zur Auswerteschaltung dienen. Die in Fig. 6 sichtbare Auswerteschaltung 16, die in der Art einer integrierten Schaltung, eines Mikroprozessors o. dgl. ausgebildet sein kann, kann dann im und/oder am Gehäuse 4 befindlich sein, oder auch in Verbindung mit dem Gehäuse 4 stehen oder in sonstiger Weise angeordnet sein. Dadurch wird die Trennvorrichtung 3 zu einem vollständigen Sensor mit eigener Intelligenz, der beispielsweise als Druck-, Differenzdruck- und/oder Füllstandsensor in Hausgeräten verwendbar ist.

In Fig. 6 ist weiter ein Einfach-Druckmesser in näherer Ausgestaltung zu sehen. Dieser besitzt wiederum ein in der Art einer Druckmeßkapsel 12 ausgestaltetes Gehäuse 4 für die Kammer 7, die mit der heißgeprägten Membran 5 abgeschlossen ist. Zur Zuführung des Fluids 1, dessen Druck zu messen ist, in die Kammer 7 dient ein in der Art eines Druckanschlusses ausgestalteter Ein- und/oder Auslaßkanal 8. Die Druckmeßkapsel 12 ist an der die Membran 5 aufweisenden Seite mittels eines Abstandsrings 13, um eine Auslenkung der Membran 5 zu gestatten, an der einen Seite einer Leiterplatte 14 angeordnet. In etwa mittig zum Abstandsring 13 befindet sich eine Öffnung 15 in der Leiterplatte 14, um einen gewissen Druckausgleich bei Auslenkung der Membran 5 zu gewährleisten. Die metallische Membran 5 dient wiederum als Elektrode eines Kondensators, während die nicht sichtbare Gegenelektrode zur Membran 5 in der Art einer Leiterbahnfläche auf der Leiterplatte 14 angeordnet ist. Auf der Leiterplatte 14 befindet sich weiter ein Controller 16, der als Auswerteschaltung für die Kapazitätsänderung zur Ermittlung des Drucks in der Kammer 7 dient. Zwecks elektrischen Anschlusses für den Einfach-Druckmesser ist an der Leiterplatte 14 noch ein Steckrahmen 17 angeordnet.

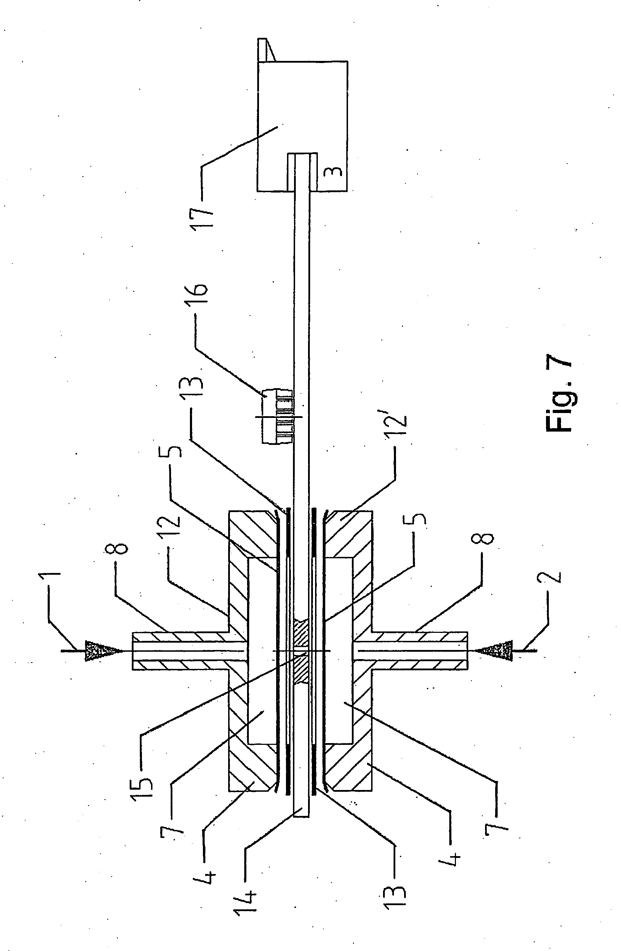

In einfacher Weise läßt sich anhand dieses Prinzips ein Doppel-Druckmesser ausgestalten, wie in Fig. 7 gezeigt ist. Hierzu ist lediglich eine weitere Druckmeßkapsel 12' in etwa spiegelbildlich an der anderen Seite der Leiterplatte 14 angeordnet.

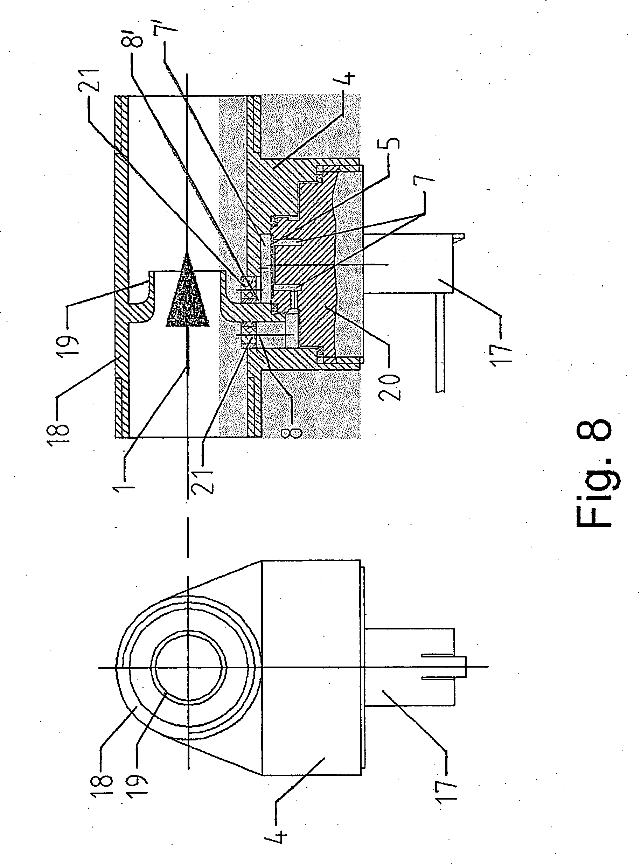

In Fig. 8 ist ein Differenzdruck-Durchflußmesser in näherer Ausgestaltung zu sehen. Am Gehäuse 4 des Durchflußmessers ist eine Zuleitung 18 für das Fluid 1 angeordnet, die mit einer Querschnittsverengung 19 zur Differenzdruck-Durchflußmessung versehen ist. In Fließrichtung des Fluids 1 vor der Querschnittesverengung 19 ist ein Ein- und/oder Auslaßkanal 8 zu einer ersten Kammer 7 angeordnet. Die in etwa ringförmig ausgestaltete Kammer 7 befindet sich in einem Sockel 20 und ist mit einer heißgeprägten Membran 5 als Abschluß versehen. Der Sockel 20 ist derart in das Gehäuse 4 eingesetzt, daß die Membran 5 einer zweiten Kammer 7' im Gehäuse 4 zugewandt ist. In Fließrichtung des Fluids 1 hinter der Querschnittsverengung 19 ist ein weiterer Ein- und/oder Auslaßkanal 8' zur zweiten Kammer 7' angeordnet. In der ersten Kammer 7 entsteht aufgrund des fließenden Fluids 1 ein Druck und in der zweiten Kammer 7' ein Sog, so daß wiederum eine Auslenkung der Membran 5 in Richtung der zweiten Kammer 7' bewirkt wird. Diese Auslenkung korreliert zum Differenzdruck an der Querschnittsverengung 19, welcher wiederum zur Berechnung der Durchflußmenge des Fluids 1 in der Zuleitung 18 herangezogen werden kann. Am Ein- und/oder Auslaßkanal 8, 8' können Filter 21 an der Zuleitung 18 angeordnet sein, um eine Verschmutzung der Kammern 7, 7' zu verhindern. Der beschriebene Differenzdruck-Durchflußmesser besitzt keine beweglichen Teile und ist daher weitgehend verschleißfrei, langlebig sowie fehlerunanfällig.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann die erfindungsgemäße Trennvorrichtung 3 nicht nur in Hausgeräten sondern in vielfältigen Anwendungen Verwendung finden. Beispielsweise läßt sich die Trennvorrichtung 3 als Drucksensor für die Luftzuführung im Motor bei Kraftfahrzeugen, als Füllstandgeber im Tank von Kraftfahrzeugen o. dgl. einsetzen.

**Bezugszeichen-Liste:**

| | |
|---|---|
| 1,2: | (fluides) Medium / Fluid |
| 3: | Trennvorrichtung |
| 4: | Gehäuse |
| 4',4": | Gehäuse / Gehäuseteil |
| 5: | Membran |
| 6,6',6": | Heißprägungsstelle |
| 7,7': | Kammer |
| 8,8': | Ein- und/oder Auslaßkanal |
| 9: | Kondensator |
| 10: | Platte (von Kondensator) |
| 11: | elektrischer Anschluß |
| 12,12': | Druckmeßkapsel |
| 13: | Abstandsring |
| 14: | Leiterplatte |
| 15: | Öffnung |
| 16: | Controller / Auswerteschaltung |
| 17: | Steckrahmen |
| 18: | Zuleitung |
| 19: | Querschnittsverengung |
| 20: | Sockel |
| 21: | Filter |

## Patentansprüche

1. Vorrichtung zur Trennung zweier fluider Medien (1, 2), die als eine Druckmeßvorrichtung dient, mit einem Gehäuse (4, 4', 4"), und mit einer im und/oder am Gehäuse (4,4', 4") angeordneten, insbesondere aus einer Folie bestehenden Membran (5), derart daß wenigstens ein mittels der Membran (5) abgetrenntes Volumen als eine Kammer (7) im und/oder am Gehäuse (4, 4', 4") gebildet ist, wobei es sich bei der Membran (5) um eine Heißprägefolie handelt, wobei die Membran (5) durch Heißprägen im und/oder am Gehäuse (4, 4', 4") befestigt ist, wobei die Membran (5) als Elektrode in einem Kondensator (9) angeordnet ist, derart daß die Auslenkung der Membran (5) anhand der Kapazitätsänderung des Kondensators (9) als eine kapazitive Wegmessung meßbar ist, und wobei das Gehäuse (4, 4', 4") für die Kammer (7) mit der heißgeprägten Membran (5) als eine Druckmeßkapsel (12) ausgestaltet ist, **dadurch gekennzeichnet, daß** die Druckmeßkapsel (12) an der die Membran (5) aufweisenden Seite mittels eines Abstandsrings (13) an der einen Seite einer Leiterplatte (14) angeordnet ist, und daß die Gegenelektrode zur Membran (5) als eine Leiterbahnfläche auf der Leiterplatte (14) angeordnet ist.

2. Vorrichtung nach Anspruch 1, **dadurch gekennzeichnet, daß** eine weitere Druckmeßkapsel (12') in etwa spiegelbildlich an der anderen Seite der Leiterplatte (14) angeordnet ist, und daß vorzugsweise eine Auswerteschaltung (16) für die Kapazitätsänderung zur Ermittlung des Drucks auf der Leiterplatte (14), die insbesondere zwecks elektrischen Anschlusses einen Steckrahmen (17) aufweist, angeordnet ist.

3. Vorrichtung nach Anspruch 1 oder 2, **dadurch gekennzeichnet, daß** die Membran (5) zwischen zwei Volumen im und/oder am Gehäuse (4, 4', 4") befestigt ist, und daß vorzugsweise die Volumen gegeneinander druckdicht mittels der Membran (5) getrennt sind.

4. Vorrichtung nach einem der Ansprüche 1 bis 3, **dadurch gekennzeichnet, daß** die Heißprägefolie aus einer Metallfolie, insbesondere aus Kupfer oder Nickel, aus einer gegebenenfalls metallisierten Kunststoff-Folie oder aus einer Metall-Kunststoff-Compoundfolie besteht, daß vorzugsweise die Metallfolie galvanisch abgeschieden, chemisch abgeschieden oder gewalzt hergestellt ist, und daß weiter vorzugsweise das Gehäuse (4, 4', 4") aus Kunststoffbesteht.

5. Vorrichtung nach einem der Ansprüche 1 bis 4, **dadurch gekennzeichnet, daß** das Gehäuse (4, 4', 4") wenigstens eine Kammer (7, 7') in der Art eines abgetrennten Volumens für wenigstens eines der fluiden Medien (1, 2) aufweist, daß vorzugsweise an der einen Seite der Kammer (7, 7') die Membran (5) angeordnet ist, daß weiter vorzugsweise die Kammer (7, 7') an den anderen Seiten durch Wände begrenzt ist, und daß noch weiter vorzugsweise die Kammer (7, 7') Verbindungsmittel, insbesondere in der Art eines Ein- und/oder Auslaßkanals (8), für das fluide Medium (1, 2) nach außen besitzt.

6. Vorrichtung nach einem der Ansprüche 1 bis 5, **dadurch gekennzeichnet, daß** die Vorrichtung dazu ausgebildet ist, die Auslenkung der Membran (5) zu messen, zur Messung des zwischen den beiden Medien (1, 2) wirkenden Drucks (d1, d2), insbesondere in der Art eines Druck-, Differenzdruck- und/oder Füllstandsensors.

7. Vorrichtung nach einem der Ansprüche 1 bis 6, **dadurch gekennzeichnet, daß** die Membran (5) aus Metall oder einem metallisierten Kunststoffbesteht.

8. Vorrichtung nach einem der Ansprüche 1 bis 7, **dadurch gekennzeichnet, daß** die als Elektrode für den Kondensator (9) dienende metallische Fläche der Membran (5) gleichzeitig als elektrischer Anschluß (11) zu einer Auswerteschaltung für die Kapazitätsänderung des Kondensators (9) verwendet wird, und daß vorzugsweise die Auswerteschaltung, beispielsweise in der Art einer integrierten Schaltung, im und/oder am Gehäuse (4, 4', 4") oder in Verbindung mit dem Gehäuse (4, 4', 4") stehend befindlich ist.

## Claims

1. A device for separating two fluid media (1, 2), serving as a pressure measuring device, comprising a housing (4, 4', 4"), and a membrane (5) arranged in and/or on the housing (4, 4', 4"), in particular made of foil, so that at least one volume partitioned by means of the membrane (5) is formed as a chamber (7) in and/or on the housing (4, 4', 4"), with the membrane (5) being a hot-press foil, wherein the membrane (5) is fastened in and/or on the housing (4, 4', 4") by hot pressing, wherein the membrane (5) is arranged as an electrode inside a capacitor (9) so that the deflection of the membrane (5) can be measured by means of a change in capacitance of the capacitor (9) as a capacitive position measurement, and wherein the housing (4, 4', 4") is configured for the chamber (7) with the hot-pressed membrane (5) as a pressure measuring capsule (12), **characterized in that** the pressure measuring capsule (12) is arranged on the side having the membrane (5) by means of a spacer ring (13) on one side of a printed circuit board (14), and **in that** the counter electrode is arranged with respect to the membrane (5) as a strip conductor surface on the printed circuit board (14).

2. The device according to claim 1, **characterized in that** another pressure measuring capsule (12') is arranged in an approximately mirror-like fashion on the other side of the printed circuit board (14), and **in that** preferably a circuit (16) for evaluating the change in capacitance is arranged for determining the pressure on the printed circuit board (14), which has a plug-in frame (17) in particular for the purpose of electrical connection.

3. The device according to claim 1 or 2, **characterized in that** the membrane (5) is fastened between two volumes in and/or on the housing (4, 4', 4"), and **in that** preferably the volumes are separated from each other in a pressure-tight manner by means of the membrane (5).

4. The device according to any of claims 1 to 3, **characterized in that** the hot-press foil consists of a metal foil, in particular of copper or nickel, a possibly metal-coated plastic foil, or a metal-plastic compound foil, **in that** preferably the metal foil is made by electrolytic deposition, chemical deposition, or rolling, and **in that** more preferably the housing (4, 4', 4") is made of plastic.

5. The device according to any of claims 1 to 4, **characterized in that** the housing (4, 4', 4") has at least one chamber (7, 7') of the type of a partitioned volume for at least one of the fluid media (1, 2), **in that** the membrane (5) is preferably arranged on one side of the chamber (7, 7'), **in that** more preferably the chamber (7, 7') is limited by walls on the other sides, and **in that** even more preferably the chamber (7, 7') has connecting means with the outside, in particular of the type of an inlet and/or outlet channel (8) for the fluid medium (1, 2).

6. The device according to any of claims 1 to 5, **characterized in that** the device is embodied for measuring the deflection of the membrane (5) for measuring the pressure (d1, d2) acting between both fluids (1, 2), in particular of the type of a pressure, pressure differential, and/or level sensor.

7. The device according to any of claims 1 to 6, **characterized in that** the membrane (5) is made of metal or metalized plastic.

8. The device according to any of claims 1 to 7, **characterized in that** the metal surface of the membrane (5), serving as an electrode for the capacitor (9), is at the same time used as an electrical connector (11) to the circuit for evaluating the change in capacitance of the capacitor (9), and **in that** preferably the evaluation circuit, e.g. of the type of an integrated circuit, is located in and/or on the housing (4, 4', 4") or communicating with the housing (4, 4', 4").

## Revendications

1. Dispositif destiné à séparer deux substances fluides (1, 2) qui fait fonction de dispositif de mesure de la pression, comprenant un logement (4, 4', 4") et comprenant une membrane (5), en particulier constituée d'une feuille, agencée dans et/ou sur le logement (4, 4', 4") de telle sorte qu'au moins un volume séparé au moyen de la membrane (5) est formé en tant que compartiment (7) dans et/ou sur le logement (4, 4', 4"), étant entendu que la membrane (5) est une feuille estampée à chaud, étant entendu que la membrane (5) est fixée dans et/ou sur le logement (4, 4', 4") par estampage à chaud, étant entendu que la membrane (5) est agencée en tant qu'électrode dans un condensateur (9) de telle sorte que la déviation de la membrane (5) peut être mesurée sur la base de la modification de la capacité du condensateur (9) en tant que mesure de déplacement capacitive, et étant entendu que le logement (4, 4', 4") est réalisé en tant que capsule de mesure de la pression (12) pour le compartiment (7) avec la membrane (5) estampée à chaud, **caractérisé en ce que** la capsule de mesure de la pression (12) est agencée sur le côté dirigé vers la membrane (5) au moyen d'une bague d'entretoise (13) sur un côté d'une plaque conductrice (14) et **en ce que** la contre-électrode vers la membrane (5) est agencée en tant que surface de conducteur imprimé sur la plaque conductrice (14).

2. Dispositif selon la revendication 1, **caractérisé en ce qu'**une capsule de mesure de la pression supplémentaire (12') est agencée dans une position sensiblement inversée sur l'autre côté de la plaque conductrice (14) et **en ce que** de préférence, un commutateur d'analyse (16) pour la modification de la capacité aux fins de la détermination de la pression est agencé sur la plaque conductrice (14), lequel présente en particulier un cadre d'enfichage (17) aux fins de la connexion électrique.

3. Dispositif selon la revendication 1 ou 2, **caractérisé en ce que** la membrane (5) est fixée entre deux volumes dans et/ou sur le logement (4, 4', 4") et **en ce que** de préférence, les volumes sont séparés l'un de l'autre de façon étanche à la pression au moyen de la membrane (5).

4. Dispositif selon l'une des revendications 1 à 3, **caractérisé en ce que** la feuille d'estampage à chaud est constituée d'une feuille de métal, en particulier en cuivre ou en nickel, d'une feuille de plastique, le cas échéant, métallisée, ou d'une feuille composite de métal et de plastique, **en ce que** de préférence, la feuille de métal est séparée par galvanisation, séparée chimiquement ou fabriquée par laminage, et **en ce qu'**encore de préférence, le logement (4, 4', 4") est constitué de plastique.

5. Dispositif selon l'une des revendications 1 à 4, **caractérisé en ce que** le logement (4, 4', 4") présente au moins un compartiment (7, 7') à la manière d'un volume séparé pour au moins une des substances liquides (1, 2), **en ce que** de préférence, la membrane (5) est agencée sur un côté du compartiment (7, 7'), **en ce qu'**encore de préférence, le compartiment (7, 7') est délimité sur l'autre côté par des parois, et **en ce qu'**encore plus de préférence, le compartiment (7, 7') présente des moyens de raccordement, en particulier à la manière d'une conduite d'admission et/ou de sortie (8), pour la substance liquide (1, 2).

6. Dispositif selon l'une des revendications 1 à 5, **caractérisé en ce que** le dispositif est conçu pour mesurer la déviation de la membrane (5) afin de mesurer la pression (d1, d2) s'exerçant entre les deux substances (1, 2), en particulier à la manière d'un capteur de pression, de pression différentielle et/ou de niveau de remplissage.

7. Dispositif selon l'une des revendications 1 à 6, **caractérisé en ce que** la membrane (5) est constituée de métal ou d'un plastique métallisé.

8. Dispositif selon l'une des revendications 1 à 7, **caractérisé en ce que** la surface métallique de la membrane (5) faisant fonction d'électrode pour le condensateur (9) est utilisée en même temps en tant que raccordement électrique (11) avec un commutateur d'analyse pour la modification de la capacité du condensateur (9) et **en ce que** de préférence, le commutateur d'analyse, par exemple à la manière d'un commutateur intégré, se trouve dans et/ou sur le logement (4, 4', 4") ou en liaison avec le logement (4, 4', 4").
